# EUROPÄISCHE PATENTSCHRIFT

(11) **EP 0 369 521 B1**
(45) Veröffentlichungstag und Bekanntmachung des Hinweises auf die Patenterteilung: **22.02.1995**
(21) Anmeldenummer: 89202812.7
(22) Anmeldetag: 08.11.1989
(51) Int. Cl.: F16F 7/12, B62D 1/19

(54) **Einbauteil zur Absorption von Energie**
Energy-absorbing construction element
Elément de construction pour l'absorption d'énergie

(30) Priorität: 15.11.1988 DE 3838594
(43) Veröffentlichungstag der Anmeldung: 23.05.1990
(73) Patentinhaber: KOLBENSCHMIDT Aktiengesellschaft, D-74150 Neckarsulm (DE)
(72) Erfinder: Drefahl, Klaus, D-6450 Hanau am Main (DE)
(74) Vertreter: Rieger, Harald, Dr.

(56) Entgegenhaltungen:
- DE-A- 2 614 041
- FR-A- 1 586 115
- US-A- 4 312 430

## Beschreibung

Die Erfindung betrifft ein Einbauteil zur Absorption von Energie gemäß Oberbegriff sowohl des Anspruchs 1 als auch des Anspruchs 6.

In Lenkanlagen für Kraftfahrzeuge eingebaute Bauteile zur Absorption von Energie, die nach dem Prinzip der stauchenden Formänderung von mechanischen Strukturen funktionieren, sollen bei Kollisionen die Wucht des gegen das Lenkrad geschleuderten Körpers des Lenkers des Kraftfahrzeugs durch Formänderungsarbeit aufnehmen, d.h. die dem Fahrer innenwohnende kinetische Energie soll über möglichst große Wege und damit "kleine" Kräfte abgebaut und auf diese Weise schwere Verletzungen des Fahrers verhindert werden.

So ist in der DE-B-1 912 528 ein Lenkrad für Kraftfahrzeuge beschrieben, dessen als Aufprallfläche dienender Teil bei Unfällen mit einem mit der Lenkradnabe verbundenen rohrförmigen Einbauteil zur Absorption von Energie zusammenwirkt. Das Einbauteil besitzt eine gitterförmige Struktur, die durch mehrere von einem gemeinsamen Punkt ausgehende Bänderpaare, die schraubenförmige Wicklungen gleicher Steigung und entgegengesetzten Steigungssinnes ergeben, gebildet sind, wobei die Kreuzungsstellen der Bänderpaare gleichmäßig über den Umfang verteilt sind. Bei einem solchen Einbauteil geht ein wesentlicher Teil des Formänderungswegs durch die Bänderpaare und deren Kreuzungsstellen verloren, weil diese sich unter Drucklast zu einem Paket übereinander lagern und somit den Formänderungsweg reduzieren. Den gleichen Nachteil besitzt auch das in der DE-A-2 623 521 beschriebene rohrförmige Einbauteil zur Absorption von Energie mit zahlreichen systematisch angeordneten Durchbrüchen, wobei die bei der Formänderung wirksamen Wandungsabschnitte eine annähernd gleiche Größe besitzen sollen.

In der DE-A-2 614 041 ist gemäß Oberbegriff sowohl des Anspruchs 1 als auch des Anspruchs 6 ein Einbauteil zur Absorption von Energie vorgesehen, das aus einem elastisch oder plastisch verformbaren Metallkörper besteht, der aus im Kreis nebeneinander angeordneten Stützelementen, wie Stegen, Streben, Stäben oder dergleichen, gebildet ist und die bei Druckbelastung des Lenkrades durch die Anordnung von nach außen gerichteten Sollknickstellen ein Nachaußenknicken der Stützelemente bewirken sollen. Der Nachteil eines derartigen Einbauteils besteht darin, daß auf dem Formänderungsweg bei teilweise gefährlich hohen Druckkraftspitzen zu wenig Energie abgebaut wird. Dieser Nachteil gilt im übrigen auch für alle vorstehend angeführten rohrförmig gestalteten Einbauteile zur Absorption von Energie. Das gilt auch für das durch die US-A-4 312 430 bekannte Deformationselement, bei dem die Metallstäbe mit als Sollknickstellen dienenden Knicken versehen sind und das ebenfalls den Stand der Technik gemäß Oberbegriff sowohl des Anspruchs 1 als auch des Anspruch 6 entspricht.

Aufgabe der vorliegenden Erfindung ist es deshalb, das eingangs beschriebene Einbauteil zur Absorption von Energie so zu gestalten, daß im Falle einer Kollision die Formänderungskraft anfangs verhältnismäßig steil ansteigt und dann über die weitaus größte Länge des Formänderungswegs nahezu konstant bleibt, so daß die Druckkraft-Weg-Kennlinie eine Trapezform unterhalb des Kurvenverlaufs ergibt, durch die ein Einbauteil mit idealem Energieabsorptionsvermögen charakterisiert ist.

Gelöst ist diese Aufgabe durch die Merkmale sowohl des Anspruches 1 als auch die des Anspruches 6.

Ein derart ausgebildetes Einbauteil besitzt sowohl unter statischer als auch unter dynamischer Drucklast ein ideales Energieabsorptionsvermögen, da die Kennlinie für die Abhängigkeit der Formänderungskraft vom Formänderungsweg in beiden Drucklastfällen annähernd Trapezform aufweist.

Bei in axialer Richtung erfolgender stoßartiger Drucklast erfolgt ein Ausknicken der einzelnen Metallstäbe des Einbauteils mit kleinen sinusförmigen Ausbiegungen im Bereich ihrer freien Knicklänge, wobei die Formänderungskraft anfangs vergleichsweise steil ansteigt und über die größere Länge des Formänderungswegs konstant bleibt, da sich die Zähne der Geradverzahnung im Bereich der Ausknickung, beginnend in deren Maximum, fortschreitend gegeneinander abstützen.

Ein optimales Energieabsorptionsvermögen ist dann erreichbar, wenn die Geradverzahnung der Metallstäbe sowohl auf der der vorgesehenen Ausknickrichtung gegenüberliegenden Breitseite im Bereich ihrer freien Knicklänge und in den Bereichen zwischen ihren Befestigungen mit den Flanschen und den Wendepunkten der Ausknickung auf der in die gewünschte Ausknickrichtung weisenden Breitseite angebracht ist.

In aller Regel erstreckt sich die Geradverzahnung der Metallstäbe über deren Breitseiten.

Zur Erhöhung der Formänderungskraft der Metallstäbe besteht die Möglichkeit, eine von den parallel zu der die Achsen der beiden Hauptträgheitsmomente einschließenden Ebene liegenden Schmalseiten her angebrachte Geradverzahnung vorzusehen, die sich jeweils nur über weniger als 50 %, vorzugsweise 20 bis 40 %, der Breitseiten erstreckt.

Das erfindungsgemäß gestaltete Einbauteil zur Absorption von Energie ist in den Zeichnungen beispielhaft dargestellt und wird nachfolgend näher erläutert.

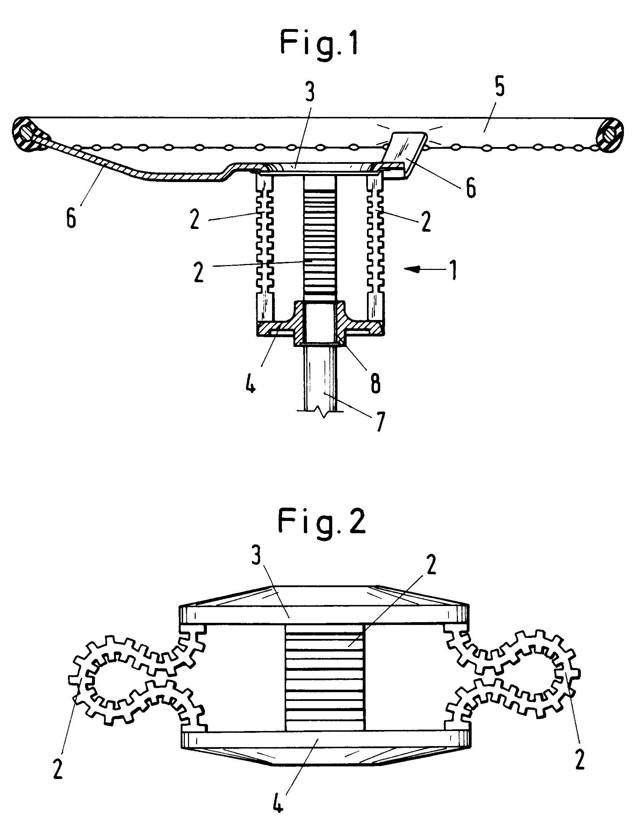

In Fig. 1 ist in schematischer Darstellung ein entlang der Lenkachse geführter Längsschnitt durch ein mit einem Einbauteil zur Absorption von Energie verbundenes Lenkrad und in Fig. 2 in einer Seitenansicht ein Einbauteil nach erfolgter Formänderung wiedergegeben. Das Einbauteil (1) besteht aus mehreren auf einem Kreis koaxial angeordneten, nicht-elastisch formänderbaren Metallstäben (2) aus Stahl des Typs St37, die an ihren Enden jeweils durch einen Stahlflansch (3,4) fest miteinander verbunden sind. An dem lenkerseitigen Flansch (3) sind die mit dem Lenkradkranz (5) verbundenen Lenkradspeichen (6) befestigt. Im lenksäulenseitigen Flansch (4) ist die auf die Lenksäule (7) aufgesetzte Lenkradnabe (8) befestigt.

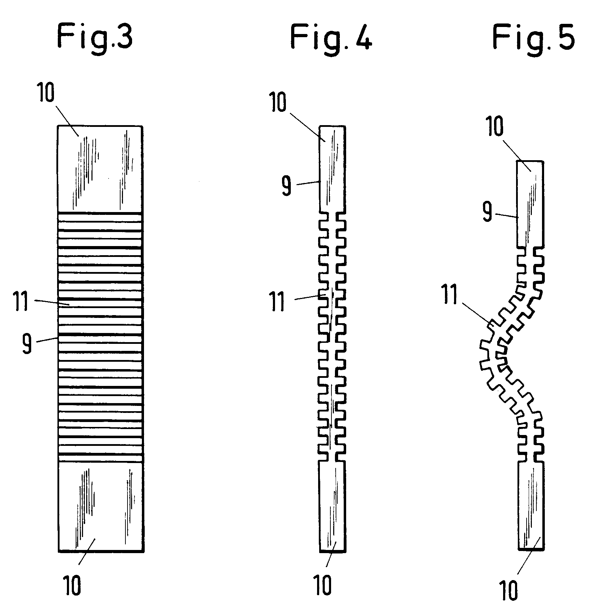

Bei dem in Fig. 3 in einer Seitenansicht in Richtung der Achse des größeren Hauptträgheitsmoments dargestellten Metallstab (9), der in Fig. 4 in einer Seitenansicht senkrecht zur Richtung der Achse des größeren Hauptträgheitsmoments wiedergegeben ist, sind die beiden jeweils zur Achse des größeren Hauptträgheitsmoments senkrecht verlaufenden Breitseiten zwischen den mit den Flanschen zu verbindenden Befestigungen (10) mit einer Geradverzahnung (11) mit rechteckförmigen Zähnen versehen. Fig. 5 zeigt die Ausknickung des Metallstabs (9) nach erfolgter Druckbelastung.

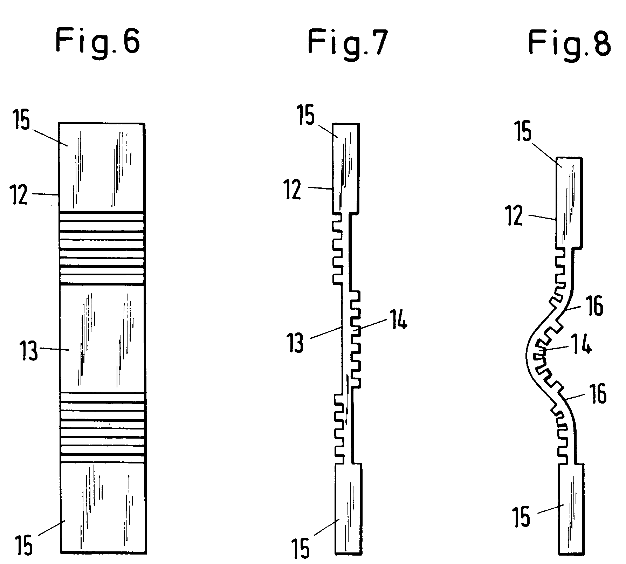

Der in Fig. 6 als Seitenansicht in Richtung der Achse des größeren Hauptträgheitsmoments gezeigte Metallstab (12), der in Fig. 7 als Seitenansicht senkrecht zur Richtung der Achse des größeren Hauptträgheitsmoments dargestellt ist, besitzt im Bereich der freien Knicklänge (13) auf der der Ausknickrichtung gegenüberliegenden Breitseite eine Geradverzahnung (14) mit rechteckförmigen Zähnen. Im Bereich zwischen den mit den Flanschen zu verbindenden Befestigungen (15) des Metallstabs (12) und den Wendepunkten (16) der Ausknickung verläuft die Geradverzahnung (14) auf der in Ausknickrichtung weisenden Breitseite. In Fig. 8 ist der Metallstab (12) nach erfolgter Druckbelastung wiedergegeben.

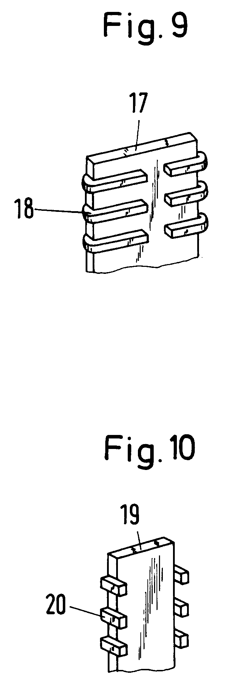

Fig. 9 zeigt in perspektivischer Darstellung das Teilstück eines Metallstabs (17), bei dem die Geradverzahnung durch an seinen beiden Schmalseiten kammartig angebrachte und auf eine der Breitseiten gebogene Zinken (18) gebildet ist.

In Fig. 10 ist in perspektivischer Darstellung das Teilstück eines Metallstabs (19) wiedergegeben, an dessen Schmalseiten kammartig angebrachte, als Geradverzahnung wirkende Zinken (20) so gebogen sind, daß sie mit einer der Breitseiten einen Winkel von 90° bilden.

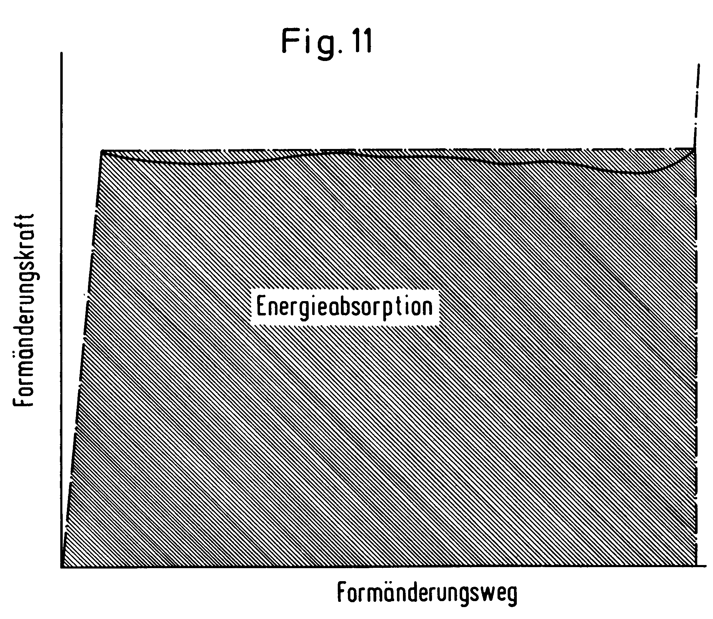

Bei dem in Fig. 11 wiedergegebenen Druckkraft-Weg-Diagramm ist die Formänderungskraft über dem Formänderungsweg aufgetragen, wobei die strichpunktierte Linie das Formänderungsverhalten eines idealen und die voll ausgezogene Kurve das Formänderungsverhalten des erfindungsgemäß gestalteten Einbauteils zur Absorption von Energie wiedergibt. Es zeigt sich, daß das Energieabsorptionsvermögen des erfindungsgemäß gestalteten Einbauteils (1) vergleichsweise geringfügig von dem idealen Verlauf der Druckkraft-Weg-Kennlinie für ein Einbauteil zur Absorption von Energie abweicht.

## Patentansprüche

1. Einbauteil (1) zur Absorption von Energie, bestehend aus mehreren auf einem Kreis koaxial angeordneten und an ihren Enden jeweils durch einen Metallflansch (3,4) fest miteinander verbundenen, nicht-elastisch formänderbaren Metallstäben (2,9,12,17), insbesondere für Lenkräder von Kraftfahrzeugen mit gegenüber dem Lenkradkranz versenkter Lenkradnabe (8), mit der das lenkerseitig durch eine aus formänderbarem Kunststoff bestehende Aufprallplatte abgedeckte Einbauteil (1) fest verbunden ist, wobei die Querabmessungen der prismatischen Metallstäbe (2,9,12,17) jeweils klein im Verhältnis zu ihren Längsabmessungen sind und die Metallstäbe (2,9,12,17) unter dem Einfluß von in axialer Richtung wirkender Druckkraft in Richtung des in der Ebene quer zur Längsabmessung des jeweiligen Metallstabes (2,9,12,17) größeren Hauptträgheitsmoments ausknickbar sind, dadurch gekennzeichnet, daß an den als gerade ausgeführten Metallstäben (2,9,12,17) auf der der senkrecht zur Achse des größeren Hauptträgheitsmoments verlaufenden und einen rechten Winkel mit dem Radius des Einbauteils (1) bildenden, auf der der gewünschten Ausknickrichtung gegenüberliegenden Breitseite des jeweiligen Metallstabes (2,9,12,17) eine quer zur Längsabmessung des jeweiligen Metallstabes (2,9,12,17) verlaufende Geradverzahnung (11,14,18) angebracht ist, deren Zähne sich bei der Ausknickbewegung des jeweiligen Metallstabes (2,9,12,17) aufeinander abstützen.

2. Einbauteil nach Anspruch 1, dadurch gekennzeichnet, daß die Geradverzahnung (14) der Metallstäbe (12) im Bereich (13) der freien Knicklänge der Breitseite angebracht ist.

3. Einbauteil nach einem der Ansprüche 1 und 2, dadurch gekennzeichnet, daß die Geradverzahnung (14) der Metallstäbe (12) in den Bereichen zwischen deren Befestigungen (15) und den Wendepunkten (16) der Ausknickung auf der in die gewünschte Ausknickrichtung weisenden Breitseite angebracht ist.

4. Einbauteil nach einem oder mehreren der Ansprüche 1 bis 3, dadurch gekennzeichnet, daß die von den parallel zu der die Achsen der beiden Hauptträgheitsmomente einschließenden Ebene liegenden Schmalseiten der Metallstäbe (17) her verlängerte Geradverzahnung (18) jeweils über weniger als 50 %, vorzugsweise 20 bis 40 %, der Breitseiten verläuft.

5. Einbauteil nach einem oder mehreren der Ansprüche 1 bis 4, dadurch gekennzeichnet, daß die Geradverzahnung durch an der einen oder an beiden Schmalseiten der Metallstäbe (17) einteilig mit diesen verbundene, kammartig angebrachte und auf die Breitseiten gebogene Zinken (18) gebildet ist.

6. Einbauteil (1) zur Absorption von Energie, bestehend aus mehreren auf einem Kreis koaxial angeordneten und an ihren Enden jeweils durch einen Metallflansch (3,4) fest miteinander verbundenen, nicht-elastisch formänderbaren Metallstäben (19), insbesondere für Lenkräder von Kraftfahrzeugen mit gegenüber dem Lenkradkranz versenkter Lenkradnabe (8), mit der das lenkerseitig durch eine aus formänderbarem Kunststoff bestehende Aufprallplatte abgedeckte Einbauteil (1) fest verbunden ist, wobei die Querabmessungen der prismatischen Metallstäbe (19) jeweils klein im Verhältnis zu ihren Längsabmessungen sind, die Metallstäbe (19) unter dem Einfluß von in axialer Richtung wirkender Druckkraft in Richtung des in der Ebene quer zur Längsabmessung des jeweiligen Metallstabes (19) größeren Hauptträgheitsmoments ausknickbar sind, dadurch gekennzeichnet, daß die Metallstäbe (19) gerade ausgeführt sind und an ihren Schmalseiten eine quer zur Längsabmessung des jeweiligen Metallstabes (19) verlaufende Geradverzahnung (11,14,18,20) angebracht ist, die in Form von Zinken (20) von dem jeweiligen Metallstab (19) entgegengesetzt zur Ausknickrichtung des jeweiligen Metallstabes (19) kammartig über eine der Breitseiten des Metallstabes (19) hinaus abstehen, wobei die Zinken (20) einen rechten Winkel mit der Breitseite des jeweiligen Metallstabes (19) bilden und sich bei der Ausknickbewegung des jeweiligen Metallstabes (19) aufeinander abstützen.

## Claims

1. An installable component (1) for the absorption of energy, consisting of a plurality of inelastically deformable metal rods (2, 9, 12, 17) arranged coaxially on a circle and joined together securely at their ends in each case by a metal flange (3, 4), in particular for steering-wheels for motor vehicles having a steering-wheel hub (8) which is recessed with respect to the steering-wheel rim, to which the installable component (1) which is covered on the driver's side by an impact plate made of deformable plastic is securely attached, the transverse dimensions of the prismatic metal rods (2, 9, 12, 17) in each case being small compared with their longitudinal dimensions, and the metal rods (2, 9, 12, 17) under the influence of pressure force acting in the axial direction being designed to buckle in the direction of the larger principal moment of inertia in the plane transversely to the longitudinal dimension of the respective metal rod (2, 9, 12, 17), characterised in that on the straight metal rods (2, 9, 12, 17) spur teeth (11, 14, 18) extending transversely to the longitudinal dimension of the respective metal rod (2, 9, 12, 17) are attached to the broad side of the respective metal rod (2, 9, 12, 17) which lies opposite the desired direction of buckling, extends at right-angles to the axis of the larger principal moment of inertia and forms a right-angle with the radius of the installable component (1), the teeth of which spur teeth upon the buckling movement of the respective metal rod (2, 9, 12, 17) are supported on one another.

2. An installable component according to Claim 1, characterised in that the spur teeth (14) of the metal rods (12) are attached in the region (13) of the free buckling length of the broad side.

3. An installable component according to one of Claims 1 and 2, characterised in that the spur teeth (14) of the metal rods (12) are attached on the broad side which faces in the desired direction of buckling in the regions between the attachments (15) thereof and the inflection points (16) of the buckled portion.

4. An installable component according to one or more of Claims 1 to 3, characterised in that the spur teeth (18) extended from the narrow sides of the metal rods (17) lying parallel to the plane enclosing the axes of the two principal moments of inertia extend in each case over less than 50%, preferably 20 to 40%, of the broad sides.

5. An installable component according to one or more of Claims 1 to 4, characterised in that the spur teeth are formed by a comb-like array of tines (18) which are connected integrally to the metal rods on one or both narrow sides of the metal rods (17) and are bent on the broad sides.

6. An installable component (1) for the absorption of energy, consisting of a plurality of inelastically deformable metal rods (19) arranged coaxially on a circle and joined together securely at their ends in each case by a metal flange (3, 4), in particular for steering-wheels for motor vehicles having a steering-wheel hub-(8) which is recessed with respect to the steering-wheel rim, to which the installable component (1) which is covered on the driver's side by an impact plate made of deformable plastic is securely attached, the transverse dimensions of the prismatic metal rods (19) in each case being small compared with their longitudinal dimensions, the metal rods (19) under the influence of pressure force acting in the axial direction being designed to buckle in the direction of the larger principal moment of inertia in the plane transversely to the longitudinal dimension of the respective metal rod (19), characterised in that the metal rods (19) are straight and spur teeth (11, 14, 18, 20) extending transversely to the longitudinal dimension of the respective metal rod (19) are attached to their narrow sides, which project in comb-like manner beyond one of the broad sides of the metal rod (19) in the form of tines (20) of the respective metal rod (19) in the opposite direction to the direction of buckling of the respective metal rod (19), the tines (13) forming a right-angle with the broad side of the respective metal rod (19) and being supported on each other upon the buckling movement of the respective metal rod (19).

## Revendications

1. Élément de construction (1) destiné à absorber de l'énergie et constitué par plusieurs barres métalliques déformables d'une manière non élastique (2,9,12,17), qui sont disposées coaxialement sur un cercle et sont reliées entre elles de façon fixe au niveau de leurs extrémités, respectivement par une bride métallique (3,4), notamment pour des volants de véhicules automobiles comportant un moyeu (8) en renfoncement par rapport à la couronne du volant et auquel est relié rigidement l'élément de construction (1), qui est recouvert, côté conducteur, par une plaque de protection contre les chocs, réalisée en une matière plastique déformable, et dans lequel les dimensions transversales des barres métalliques prismatiques (2,9,12,17) sont respectivement faibles par rapport à leurs dimensions longitudinales et les barres métalliques (2,9,12,17) peuvent se couder en direction du moment d'inertie principal, qui est le plus élevé dans le plan transversal par rapport à l'étendue longitudinale de la barre métallique respective (2,9,12,17), sous l'influence d'une force de pression agissant dans la direction axiale, caractérisé par le fait que sur les barres métalliques (2,9,12,17) réalisées avec une forme rectiligne, est disposée, sur le grand côté de la barre métallique respective (2,9,12,17), qui s'étend perpendiculairement à l'axe du moment d'inertie principal le plus élevé et fait un angle droit avec le rayon de l'élément de construction (1) et est tourné en sens opposé de la direction de coudage désirée, une denture droite (11,14,18), qui s'étend transversalement par rapport à l'étendue longitudinale de la barre métallique respective et dont les dents prennent appui les unes sur les autres lors du mouvement de coudage de la barre métallique respective (2, 9, 12,17).

2. Élément de construction suivant la revendication 1, caractérisé par le fait que la denture droite (14) des barres métalliques (12) est disposée dans la zone (13) de la longueur de coudage libre du grand côté.

3. Élément de construction suivant l'une des revendications 1 et 2, caractérisé par le fait la denture droite (14) des barres métalliques (12) est disposée dans les zones comprises entre leurs fixations (15) et les points d'inflexion (16) du coudage, sur le grand côté tourné dans la direction de coudage désirée.

4. Élément de construction suivant une ou plusieurs des revendications 1 à 3, caractérisé par le fait que la denture droite (18), qui est prolongée à partir des petits côtés des barres métalliques (17), qui sont parallèles au plan contenant les axes des deux moments d'inertie principaux, s'étend respectivement sur moins de 50 % et de préférence entre 20 et 40 % des grands côtés.

5. Élément de construction suivant une ou plusieurs des revendications 1 à 4, caractérisé par le fait que la denture droite est formée par des dents (18) disposées en forme de peigne, qui sont reliées d'un seul tenant à un des petits côtés des barres métalliques (17) ou aux deux petits côtés de ces barres et sont rabattues sur les grands côtés.

6. Élément de construction (1) destiné à absorber une énergie et constitué par plusieurs barres métalliques déformables d'une manière non élastique (19), qui sont disposées coaxialement sur un cercle et sont reliées entre elles de façon fixe au niveau de leurs extrémités, respectivement par une bride métallique (3,4), notamment pour des volants de véhicules automobiles comportant un moyeu (8) en renfoncement par rapport à la couronne du volant et auquel est relié rigidement l'élément de construction (1), qui est recouvert, du côté du conducteur, par une plaque de protection contre les chocs, réalisée en une matière plastique déformable, et dans lequel les dimensions transversales des barres métalliques prismatiques (19) sont respectivement faibles par rapport à leurs dimensions longitudinales et les barres métalliques (19) peuvent être coudées en direction du moment d'inertie principal, qui est le plus élevé dans le plan transversal par rapport à l'étendue longitudinale de la barre métallique respective (19), sous l'influence d'une force de pression agissant dans la direction axiale, caractérisé par le fait que les barres métalliques (19) sont réalisées avec une forme rectiligne et que sur leurs petits côtés est disposée une denture droite (11,14,18,20), qui s'étend transversalement par rapport à l'étendue longitudinale de la barre métallique respective et qui fait saillie sous la forme de dents (20) à partir de la barre métallique respective (19) en sens opposé de la direction de coudage de cette barre métallique, et ce en forme de peigne, au-delà de l'un des grands côtés de la barre métallique (19), les dents (20) faisant un angle droit avec le grand côté de la barre métallique respective (19) et prenant appui les unes sur les autres lors du déplacement de coudage de la barre métallique respective (19).
